(19) [European Patent Office logo] Europäisches Patentamt / European Patent Office / Office européen des brevets

(11) **EP 3 318 423 B1**

(12) **EUROPEAN PATENT SPECIFICATION**

(45) Date of publication and mention
of the grant of the patent:
**19.02.2020 Bulletin 2020/08**

(21) Application number: **16817616.2**

(22) Date of filing: **31.05.2016**

(51) Int Cl.:
**B60C 13/02** *(2006.01)*          **B60C 13/00** *(2006.01)*

(86) International application number:
**PCT/JP2016/066052**

(87) International publication number:
**WO 2017/002507 (05.01.2017 Gazette 2017/01)**

(54) **TIRE**

**REIFEN**

**PNEU**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2015 JP 2015131772**

(43) Date of publication of application:
**09.05.2018 Bulletin 2018/19**

(73) Proprietor: **Bridgestone Corporation
Tokyo 104-8340 (JP)**

(72) Inventor: **ITOI, Dyta
Tokyo 104-8340 (JP)**

(74) Representative: **Oxley, Robin John George
Marks & Clerk LLP
15 Fetter Lane
London EC4A 1BW (GB)**

(56) References cited:
**EP-A1- 2 431 197      EP-A1- 2 502 758
EP-A1- 2 815 898      EP-A1- 3 213 936
WO-A1-2012/111773    WO-A1-2015/018763
JP-A- H11 291 722     JP-A- 2011 225 026
JP-A- 2013 035 313    JP-A- 2013 071 670
JP-A- 2013 169 827    JP-A- 2014 136 487
JP-A- 2014 180 946**

## Description

TECHNICAL FIELD

The present invention relates to a tire, more particularly a tire in which a decorative part arranged in a sidewall section is improved to enhance the visibility during traveling and to reduce the number of steps of processing a mold, whereby the processability of the mold and the cost performance are improved.

BACKGROUND ART

Conventionally, a decorative band in which plural linear or curved protruding strips (ridges) are arranged is formed in the sidewall section of a tire. For example, Patent Document 1 discloses a tire comprising decorative parts in the sidewall section thereof, which decorative parts each comprise: decorative elements having ridges; and gullies that are inclined with respect to the tire circumferential direction and make the ridges discontinuous in the tire circumferential direction by dividing each decorative element into two or more regions, wherein the ridges comprise first ridges and second ridges that are smaller than the first ridges in terms of at least either of the height and the width, and at least some of the first ridges are inclined with respect to the tire circumferential direction and are adjacent to one another, forming a gully between the adjacent first ridges. Such ridges can be obtained by, upon vulcanization molding of a green tire, forming recesses in advance on the inner wall surface of a mold (die) used for the vulcanization molding.

Reference is also made to JP 2013-071670, WO 2012/111773, WO 2015/018763, EP 2502758, EP 2431197, EP 2815898, EP 3213936, JP 2014-136487 and JP 2011-225026.

RELATED ART DOCUMENT

PATENT DOCUMENT

[Patent Document 1] Japanese Unexamined Patent Application Publication No. 2011-148338

SUMMARY OF THE INVENTION

PROBLEMS TO BE SOLVED BY THE INVENTION

According to the technology disclosed in Patent Document 1, a tire which comprises a decorative part having a highly visible design and excellent crack resistance in a sidewall section is provided. However, in this case, since the decorative part has two kinds of ridges of different heights and widths and the ridges as a whole have a complex arrangement, there is a drawback that the processing of a mold for tire vulcanization requires many steps and this is likely to result in an increased cost.

In view of this, an object of the present invention is to provide a tire in which a decorative part arranged in a sidewall section is improved to enhance the visibility during traveling and to reduce the number of steps of processing a mold, whereby the processability of the mold and the cost performance are improved.

MEANS FOR SOLVING THE PROBLEMS

The present inventor intensively studied to discover that the above-described problems can be solved by adopting the following constitution, thereby completing the present invention.

That is, the tire of the present invention is a tire as claimed in claim 1.

In the tire of the present invention, it is preferred that the plural linear parts are composed of linear parts that are oriented in 3 or 4 different directions. In the tire of the present invention, it is also preferred that the angles θ comprise two kinds of angles, n1 and n2, that satisfy the relationships represented by the following Formulae (1) and (2):

$$30° \leq n1 < 90° \quad (1)$$

$$n2 = 180° - n1 \quad (2)$$

Further, in the tire of the present invention, it is preferred that the connecting parts have a circular arc shape.

EFFECTS OF THE INVENTION

According to the present invention, a tire in which a decorative part arranged in a sidewall section is improved to enhance the visibility during traveling and to reduce the number of steps of processing a mold, whereby the mold processability and the cost performance are improved, can be provided.

BRIEF DESCRIPTION OF THE DRAWINGS

FIG. 1 is a schematic side view that illustrates a tire of one preferred embodiment of the present invention.
FIG. 2 is a schematic partially enlarged view that illustrates the decorative band according to the tire of one preferred embodiment of the present invention.
FIG. 3 is a partially enlarged view that extracts and illustrates a part of the decorative band illustrated in FIG. 2.
FIG. 4 is a drawing that explains the orientations of the linear parts of the repetitive elements illustrated in FIG. 3.

FIG. 5 is a drawing that schematically illustrates the cross-sectional shapes of the decorative band, inner peripheral protruding part and outer peripheral protruding part along the X-X line of FIG. 2.

MODE FOR CARRYING OUT THE INVENTION

Embodiments of the present invention will now be described in detail referring to the drawings.

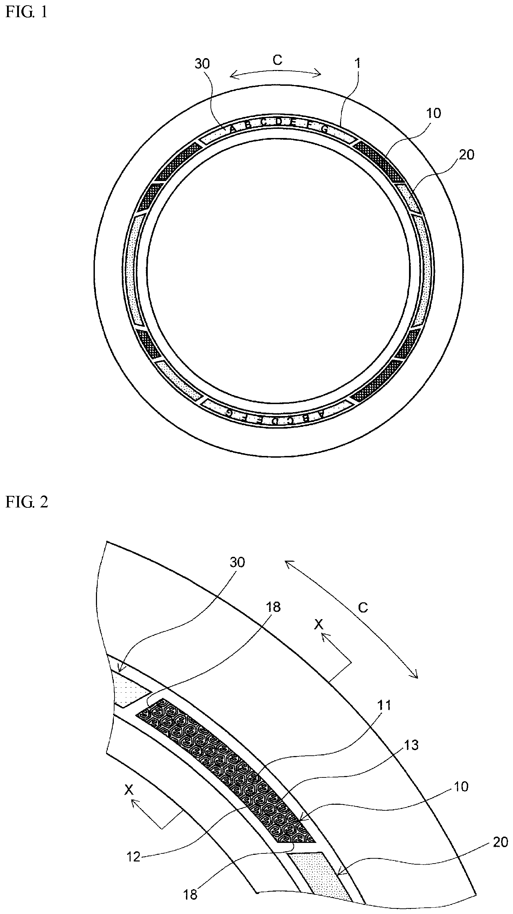

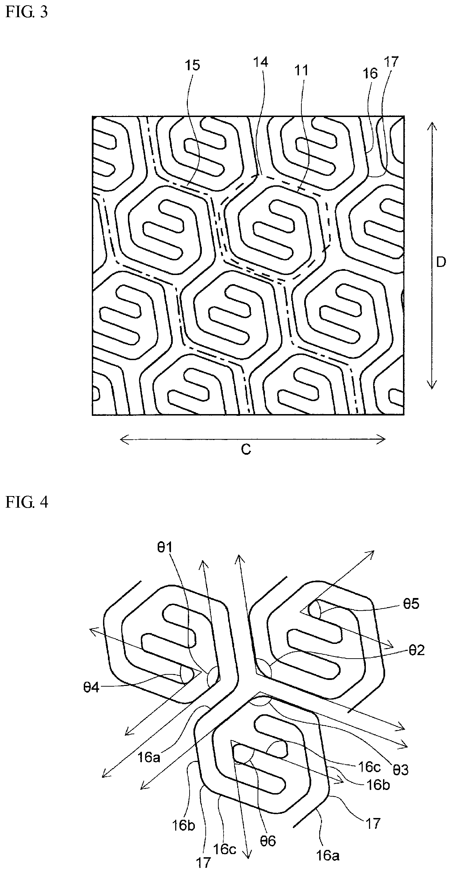

FIG. 1 is a schematic side view that illustrates a tire of one preferred embodiment of the present invention. The illustrated tire is a motorcycle tire and comprises, in a sidewall section 1: a decorative band 10; a second decorative band 20; and a mark part 30. FIG. 2 is a schematic partially enlarged view that illustrates the decorative band according to the tire of one preferred embodiment of the present invention; FIG. 3 is a partially enlarged view that extracts and illustrates a part of the decorative band illustrated in FIG. 2; and FIG. 4 is a drawing that explains the orientations of the linear parts of the repetitive elements illustrated in FIG. 3.

The tire of the present invention comprises the decorative band 10, which has high designability and excellent visibility, in the sidewall section 1. That is, in the tire of the present invention, the decorative band 10 having irregularities on its surface is arranged in the sidewall section 1, and light (e.g., sunlight or ambient light) striking against the tire during rotation is reflected by the irregularities. The shaing difference attributed to the difference in reflection off the irregularities arranged on the decorative band 10 is utilized to make the decorative band 10 flicker and to thereby improve the visibility. In the tire of the present invention, as illustrated in FIG. 2, the decorative band 10 is formed by ridges 11 and, in the illustrated example, the decorative band 10 is defined by an inner peripheral protruding part 12 and an outer peripheral protruding part 13, which are arranged adjacent to the tire radially inner side and outer side of the decorative band 10, respectively.

In the tire of the present invention, as illustrated in FIG. 3, the decorative band 10 comprises a decorative element 15 (portion surrounded by a dash-dot line in FIG. 3) constituted by repetition of a repetitive element 14 (portion surrounded by a dotted line in FIG. 3), and the decorative element 15 is formed by a ridge 11 that extends continuously from the inner peripheral protruding part 12 to the outer peripheral protruding part 13 without any interruption. That is, in the tire of the present invention, the decorative element 15 has a unicursal shape from the inner peripheral protruding part 12 to the outer peripheral protruding part 13. This shape makes it easy to process a mold used for vulcanization molding of a green tire and allows the decorative element 15 to be formed without any edge, so that the crack resistance of the tire can be maintained. It is noted here that, in the illustrated example, the decorative element 15 is arranged in a plural number in the tire circumferential direction. The arrow C drawn in FIG. 3 indicates a substantially circumferential direction of the tire.

In the tire of the present invention, the repetitive elements 14 constituting the decorative element 15 are each constituted by plural linear parts 16 and plural connecting parts 17 connecting the plural linear parts 16, and the plural linear parts 16 are composed of linear parts that are oriented in 2 to 6 different directions. FIG. 4 is a drawing that explains the orientations of the linear parts of the repetitive elements illustrated in FIG. 3. In the illustrated example, linear parts 16a, 16b and 16c, which have three different orientations extending in parallel to the three arrows, are connected by the connecting parts 17 having a curved shape, and each decorative element 15 has a unicursal shape. It is noted here that the linear parts 16 may have different lengths as long as they have the same orientation.

In the tire of the present invention, since the difference in reflection of light in the decorative band 10 is utilized to make the decorative band 10 flicker, the number of the orientations of the linear parts 16 corresponds to the number of flickers per half rotation of the tire. That is, in the illustrated example, since the linear parts 16 have three orientations, the decorative band 10 flickers three times during a half rotation of the tire. However, an increase in the number of the orientations of the linear parts 16 causes light to be reflected in an increase number of directions, so that the contrast of light in flickering is reduced and the visibility is thereby deteriorated. Therefore, in the tire of the present invention, the number of the orientations of the linear parts 16 of each repetitive element 14 is 2 to 6, preferably 3 or 4, more preferably 3. In the case of a motorcycle tire, since the sidewall section 1 may be partially concealed by a mudguard or the like, 1 or 2 orientations of the linear parts leads to an excessively small number of flickers and may thus be insufficient from the visibility standpoint.

Further, in the tire of the present invention, angles $\theta$ formed by the linear parts 16 connected via the connecting parts 17 are 30° to 150° and, in the example illustrated in FIG. 4, there are two angles $\theta$ of 120° and 60°, with angles $\theta1$ to $\theta3$ being 120° and angles $\theta4$ to $\theta6$ being 60°. When the angles $\theta$ are smaller than 30° or larger than 150°, there arise such problems of weakened flickering and difficulty in the formation of the repetitive elements. In addition, such angles $\theta$ make it difficult to process a mold used for vulcanization molding of a green tire. Therefore, in the present invention, the angles $\theta$ formed by the linear parts 16 are preferably 30° to 150° and include two kinds of angles, n1 and n2, that satisfy the relationships represented by the following Formulae (1) and (2):

$$30° \leq n1 < 90° \quad (1)$$

$$n2 = 180° - n1 \quad (2)$$

More preferably, n is 60° or larger but smaller than 90°. In the tire of the present invention, it is still more preferred that the linear parts 16 have 3 or 4 orientations and the relationships of the Formulae (1) and (2) are satisfied, and it is particularly preferred that the linear parts 16 have 3 orientations and the angles θ are composed of two kinds of angles that satisfy the relationships of the Formulae (1) and (2).

Particularly, when all of the angles θ formed by the linear parts 16 are the same, since the decorative part flickers at regular intervals, an orderly impression can be given to consumers. On the other hand, when the decorative part flickers at unequal (irregular) intervals, even if there is actually no flaw in uniformity, a bad impression that the tire has a flaw in uniformity may be given to consumers. From this standpoint as well, it is preferred to constitute the plural linear parts of each repetitive element by three kinds of linear parts that have different orientations and to control the angles θ formed by these three kinds of linear parts to be 120° and 60°.

In the tire of the present invention, as illustrated, the connecting parts 17 may have a circular arc shape; however, the linear parts may directly intersect with each other. In this case, the intersection points of the linear parts are the connecting parts. Further, in the tire of the present invention, it is preferred that the repetitive elements 14 each comprise the linear parts 16 as main constituents. The reason for this is because, when the ratio of the connecting parts 17 with respect to the repetitive elements is high, light is reflected in a multiple directions, so that the contrast between in and out of light in flickering is reduced and the visibility is thereby deteriorated.

In the tire of the present invention, the repetition interval (pitch) of the repetitive elements 14 is preferably constant. Repetition of the repetitive elements 14 at constant intervals enables to evenly arrange the elements with regularity. Further, in the tire of the present invention, the interval between the repetitive elements 14 is preferably 15 mm or less. When the repetition interval is larger than 15 mm, sufficient visibility may not be attained since the ratio of flat portions with respect to the decorative band 10 is increased and this weakens the flickering of the decorative band 10. Moreover, when the connecting parts 17 have a circular arc shape, the radius of the circular arc is preferably 1.5 times or less of the gap between the ridges 11 (the gap between the linear parts 16). When the radius of the circular arc is larger than 1.5 times of the gap between the ridges 11, since the ratio of flat portions with respect to the decorative band 10 is increased, the flickering of the decorative band 10 may be weakened.

In the tire of the present invention, as illustrated in FIG. 2, it is preferred to arrange lateral peripheral protruding parts 18, which extend in the tire radial direction on each side of the decorative band 10 in the tire circumferential direction (the direction of the arrow C in FIG. 2), in addition to the inner peripheral protruding part 12 and the outer peripheral protruding part 13. By arranging the lateral peripheral protruding parts 18 to separate the decorative band 10 from other regions along the tire circumferential direction, not only an effect of inhibiting flexural deformation caused by bending of the tire can be enhanced but also connection of cracks in the tire circumferential direction can be more effectively inhibited.

In the tire of the present invention, as illustrated in FIG. 3, it is also preferred that the decorative element 15 extends in a direction inclined with respect to the tire radial direction. It is noted here that the arrow D in FIG. 3 indicates a substantially radial direction of the tire. With the decorative element 15 extending completely in the tire radial direction, although there is no problem during normal traveling or the like, cracking may occur when a fore-and-aft force is input. On the other hand, the arrangement of the decorative element 15 in a direction inclined with respect to the tire radial direction can make it difficult for a crack to be generated against a variety of input forces. The angle of the extending direction of the decorative element 15 with respect to the tire radial direction can be, for example, in a range of 10° to 60°.

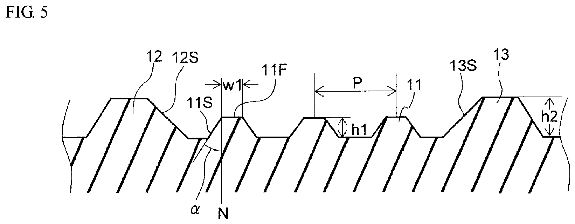

FIG. 5 is a drawing that schematically illustrates the cross-sectional shapes of the decorative band 10, the inner peripheral protruding part 12 and the outer peripheral protruding part 13 along the X-X line in FIG. 2. As illustrated in FIG. 5, it is preferred that the inner peripheral protruding part 12 and the outer peripheral protruding part 13 have a greater height than the ridges 11 constituting the decorative band 10 and are formed to be more protruded toward the tire outer surface side than the ridges 11. In cases where the lateral peripheral protruding parts 18 are arranged on each side of the decorative band 10 in tire circumferential direction, it is preferred that the lateral peripheral protruding parts 18 also have the same height as the inner peripheral protruding part 12 and the outer peripheral protruding part 13. By forming the inner peripheral protruding part 12, the outer peripheral protruding part 13 and the lateral peripheral protruding parts 18 to be higher than the ridges 11, the ridges 11 are surrounded by these parts, so that damage to the ridges 11 can be inhibited.

Further, in the illustrated example, the ridges 11 have a trapezoidal cross-section and, in the tire of the present invention, the width (w1) of a plane 11F constituting the top of the trapezoidal cross-section may be 0.2 mm at the most. An angle α formed by a sidewall 11S of each ridge 11 with respect to a normal direction N of the sidewall section 1 may be, for example, 30° to 50°. When this angle α is outside the range of 30° to 50°, variations in the strength of the reflection of light are unlikely to be apparent, so that the decorative part 10 may not sufficiently flicker. In the illustrated example, also for the land portions including the inner peripheral protruding part 12 and the outer peripheral protruding part 13, side walls 12S and 13S have a cross-sectional shape that is inclined with respect to the normal direction N of the sidewall section 1.

The height (h1) of the ridges 11 can be 0.2 to 1.0 mm. When the height of the ridges 11 is less than 0.2 mm, sufficient visibility during traveling may not be attained due to insufficient irregularities. On the other hand, the ridges 11 having a height of greater than 1.0 mm are not preferable because it makes the production difficult.

Further, the gap between adjacent ridges 11 is preferably 4 times or less of the height (h1) of the ridges 11 for at least 80% of the ridges 11 constituting the decorative band 10. The reason for this is because, since the spaces between adjacent ridges 11 are flat and do not contribute to the flickering of the decorative band 10, the effects of the present invention can be more favorably attained by densely arranging the ridges 11. When the connecting parts 17 have a circular arc shape, however, the gap between the ridges 11 has to be widened. Therefore, in the present invention, the gap between adjacent ridges 11 is prescribed as above for at least 80% of the ridges 11.

In the tire of the present invention, the decorative elements 15 constituting the decorative band 10 have a unicursal shape from the inner peripheral protruding part 12 to the outer peripheral protruding part 13 and, from the standpoint of mold processability, it is most preferred that the entire decorative band 10 can be processed in a unicursal manner. That is, if it were possible to process adjacent decorative elements 15 in a unicursal manner as well, good ease of processing a mold would be attained. However, taking into consideration the process of allowing the entire decorative band 10 to have a unicursal shape, since ridges that are continuous in the tire circumferential direction will be partially formed at both ends of the decorative band 10 in the tire radial direction, the uniformity of the decorative part 10 is impaired, disfiguring the tire. In addition, since the formation of ridges that are continuous in the tire circumferential direction at both ends of the decorative band 10 in the tire radial direction means the presence of the ridges at substantially the same positions in tire radial direction although the presence is intermittent, a crack is likely to develop in the tire circumferential direction at such parts.

Therefore, in the tire of the present invention, as illustrated, it is preferred to arrange the inner peripheral protruding part 12 and the outer peripheral protruding part 13 adjacent to the decorative band 10 on the inner and outer sides in the tire radial direction, respectively, that is, as for the shape of a mold, it is preferred to allow the mold to have a shape in which the inner and outer sides of the decorative band 10 in the tire radial direction are engraved more deeply. By this, since both ends of the decorative band 10 in the tire radial direction will not be expressed in the resulting tire even when the entire decorative band 10 is formed in a unicursal shape, the uniformity of the decorative part is not compromised and deterioration of crack resistance in this part can be prevented. Moreover, by arranging the outer peripheral protruding part 13, an effect of inhibiting breakage and the like of the decorative element 15 caused by abrasion or the like of the tire can also be attained, so that the durability of the decorative band 10 can be improved. Examples of a processing tool used for processing the mold include a mold cutter and a drill.

In the tire of the present invention, there is no additional restriction as long as the decorative band 10 formed in the sidewall section 1 comprises the decorative element 15 constituted by repetition of the repetitive element 14 and this decorative element 15 satisfies the above-described requirements. For example, in the sidewall section 1 of the example illustrated in FIG. 1, a second decorative band 20 and a mark part 30 are formed in addition to the decorative band 10 of the present invention. Further, in the illustrated example, the mark part 30 indicates, for example, a character(s), a figure(s) and/or a symbol(s) according to the type and the like of the tire in a protruding form. In the mark part 30, those areas other than the letter(s), figure(s) and symbol(s) indicated in a protruding manner may be formed as a flat and smooth surface, or a curved ridge(s) may be arranged in those areas.

As described above, the tire of the present invention comprises a decorative part that includes a decorative band having high designability and excellent visibility. The decorative part including such a decorative band has an effect of improving the visibility and is suitable for motorcycle tires.

DESCRIPTION OF SYMBOLS

    1: sidewall section
    10: decorative band
    11: ridge
    12: inner peripheral protruding part
    13: outer peripheral protruding part
    14: repetitive element
    15: decorative element
    16: linear part
    17: connecting part
    18: lateral peripheral protruding part
    20: second decorative band
    30: mark part

**Claims**

1.  A tire comprising a decorative band (10) formed by ridges (11) in a sidewall section (1), wherein said decorative band (10) comprises a plurality of decorative elements (15), each of the decorative elements (15) being formed by a ridge (11) and constituted by repetition of a repetitive element (14), said decorative element (15) extending continuously from the tire radially inner side to the tire radially outer side of said decorative band (10) without any interruption,

said repetitive element (14) is constituted by plural linear parts (16) and plural connecting parts (17) that connect said plural linear parts (16),

said plural linear parts (16) are composed of linear parts (16) that are oriented in 2 to 6 different directions,

angles θ formed by said linear parts (16) connected via said connecting parts (17) are 30° to 150°,

the decorative band (10) is defined by an inner peripheral protruding part (12) and an outer peripheral protruding part (13), which are arranged adjacent to the tire radially inner side and outer side of the decorative band (10), respectively, and

adjacent decorative elements (15) extend side by side to each other from the tire radially inner side to the tire radially outer side of said decorative band (10), **characterised in that**

each decorative element (15) has a unicursal shape extending from an inner peripheral protruding part (12) to an outer peripheral protruding part (13) without contacting any other ridges (11) formed between the inner peripheral protruding part (12) and the outer peripheral protruding part (13).

2. The tire according to claim 1, wherein said plural linear parts (16) are composed of linear parts (16) that are oriented in 3 or 4 different directions.

3. The tire according to claim 2, wherein said angles θ comprise two kinds of angles, n1 and n2, that satisfy the relationships represented by the following Formulae (1) and (2):

$$30° \leq n1 < 90° \quad (1)$$

$$n2 = 180° - n1 \quad (2)$$

4. The tire according to claim 1, wherein said connecting parts (17) have a circular arc shape.

**Patentansprüche**

1. Reifen, der ein schmückendes Band (10) umfasst, das durch Stege (11) in einer Seitenwandsektion (1) gebildet wird, wobei
das schmückende Band (10) mehrere schmückende Elemente (15) umfasst, wobei jedes der schmückenden Elemente (15) durch einen Steg (11) gebildet und durch Wiederholung eines sich wiederholenden Elements (14) erzeugt wird, wobei sich das schmückende Element (15) durchgehend ohne jegliche Unterbrechung von der in Reifenradialrichtung inneren Seite zu der in Reifenradialrichtung äußeren Seite des schmückenden Bandes (10) erstreckt,

das sich wiederholende Element (14) durch mehrere lineare Teile (16) und mehrere verbindende Teile (17), welche die mehreren linearen Teile (16) verbinden, erzeugt wird,

die mehreren linearen Teile (16) aus linearen Teilen (16) zusammengesetzt sind, die in 2 bis 6 unterschiedlichen Richtungen ausgerichtet sind,

Winkel θ, die durch die mehreren linearen Teile (16) gebildet werden, die über die verbindenden Teile (17) verbunden sind, 30° bis 150° betragen,

das schmückende Band (10) durch einen inneren umlaufenden vorspringenden Teil (12) und einen äußeren umlaufenden vorspringenden Teil (13) definiert wird, die jeweils angrenzend an die in Reifenradialseite innere Seite beziehungsweise äußere Seite des schmückenden Bandes (10) angeordnet sind, und

benachbarte schmückende Elemente (15) sich nebeneinander von der in Reifenradialrichtung inneren Seite zu der in Reifenradialrichtung äußeren Seite des schmückenden Bandes (10) erstrecken, **dadurch gekennzeichnet, dass**

jedes schmückende Element (15) eine unikursale Form aufweist, die sich von einem inneren umlaufenden vorspringenden Teil (12) bis zu einem äußeren umlaufenden vorspringenden Teil (13) erstreckt, ohne jegliche andere Stege (11) zu berühren, die zwischen dem inneren umlaufenden vorspringenden Teil (12) und dem äußeren umlaufenden vorspringenden Teil (13) geformt sind.

2. Reifen nach Anspruch 1, wobei die mehreren linearen Teile (16) aus linearen Teilen (16) zusammengesetzt sind, die in 3 oder 4 unterschiedlichen Richtungen ausgerichtet sind.

3. Reifen nach Anspruch 2, wobei die Winkel θ zwei Arten von Winkeln, n1 und n2, umfassen, welche die Beziehungen erfüllen, die durch die folgenden Formeln (1) und (2) dargestellt werden:

$$30° \leq n1 < 90° (1)$$

$$N2 = 180° - n1 \ (2).$$

4. Reifen nach Anspruch 1, wobei die verbindenden Teile (17) eine Kreisbogenform aufweisen.

**Revendications**

1. Bandage pneumatique comprenant une bande décorative (10) formée par des nervures (11) dans une section de flanc (1), dans lequel :

   ladite bande décorative (10) comprend plusieurs éléments décoratifs (15), chacun des éléments décoratifs (15) étant formé par une nervure (11) et étant constitué par la répétition d'un élément répétitif (14), ledit élément décoratif (15) s'étendant en continu du côté radialement interne du bandage pneumatique vers le côté radialement externe de ladite bande décorative (10), sans aucune interruption ;
   ledit élément répétitif (14) est constitué par plusieurs parties linéaires (16) et plusieurs parties de connexion (17), connectant lesdites plusieurs parties linéaires (16) ;
   lesdites plusieurs parties linéaires (16) sont composées de parties linéaires (16) orientées dans 2 à 6 directions différentes ;
   des angles θ formés par lesdites parties linéaires (16) connectées par lesdites parties de connexion (17) sont compris entre 30° et 150° ;
   la bande décorative (10) est définie par une partie périphérique interne en saillie (12) et une partie périphérique externe en saillie (13), agencées respectivement près du côté radialement interne du bandage pneumatique et du côté radialement externe de la bande décorative (10) ; et
   des éléments décoratifs adjacents (15) s'étendent côte à côte les uns par rapport aux autres, du côté radialement interne du bandage pneumatique vers le côté radialement externe de ladite bande décorative (10), **caractérisé en ce que** :
   chaque élément décoratif (15) a une forme unicursale s'étendant d'une partie périphérique interne en saillie (12) vers une partie périphérique externe en saillie (13) sans contacter de quelconques autres nervures (11) formées entre la partie périphérique interne en saillie (12) et la partie périphérique externe en saillie (13).

2. Bandage pneumatique selon la revendication 1, dans lequel lesdites plusieurs parties linéaires (16) sont composées de parties linéaires (16) orientées dans 3 ou 4 directions différentes.

3. Bandage pneumatique selon la revendication 2, dans lequel lesdits angles θ comprennent deux types d'angles, n1 et n2, satisfaisant la relation représentée par les formules (1) et (2) ci-dessous :

$$30° \leq n1 < 90° \ (1)$$

$$n2 = 180° - n1 \ (2).$$

4. Bandage pneumatique selon la revendication 1, dans lequel lesdites parties de connexion (17) ont une forme circulaire.

FIG. 1

FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013071670 A
- WO 2012111773 A
- WO 2015018763 A
- EP 2502758 A
- EP 2431197 A
- EP 2815898 A
- EP 3213936 A
- JP 2014136487 A
- JP 2011225026 A
- JP 2011 A
- JP 148338 A